# EUROPEAN PATENT SPECIFICATION

(11) **EP 2 922 211 B1**
(45) Date of publication and mention of the grant of the patent: **13.07.2022**
(21) Application number: 13854857.3
(22) Date of filing: 25.09.2013
(51) Int. Cl.: H04L 41/0813, H04L 41/28

(54) **A CHANNEL MANAGEMENT METHOD FOR AN ALL OUTDOOR DIGITAL MICROWAVE TRANSMISSION DEVICE AND A SYSTEM.**
KANALVERWALTUNGSVERFAHREN FÜR DIGITALE MIKROWELLENÜBERTRAGUNGSVORRICHTUNG IM FREIEN UND SYSTEM.
PROCÉDÉ DE GESTION D'UN CANAL DE DONNÉES POUR UN DISPOSITIF NUMÉRIQUE DE TRANSMISSION PAR FAISCEAUX HERTZIENS À DÉPLOIEMENT ENTIÈREMENT EN EXTÉRIEUR ET SYSTÈME.

(30) Priority: 15.11.2012 CN 201210460122
(43) Date of publication of application: 23.09.2015
(73) Proprietor: ZTE Corporation, Shenzhen, Guangdong 518057 (CN)
(72) Inventor: LI, Yajun, Shenzhen Guangdong 518057 (CN)
(74) Representative: Tiburzi, Andrea
(86) International application number: PCT/CN2013/084219
(87) International publication number: WO 2014/075517

(56) References cited:
- WO-A1-2008/141094
- WO-A1-2012/068841
- CN-A- 101 552 679
- CN-A- 101 945 491
- US-A- 5 630 212

## Description

### TECHNICAL FIELD

The disclosure relates to the field of digital microwave communications, and particularly to a method and a system.

### BACKGROUND

A traditional digital microwave transmission device management way creates an independent management element in a network device management system for each digital microwave transmission device in a network, allocates an independent network management Internet Protocol (IP) address and a network management Virtual Local Area Network (VLAN) aiming at each network element, and forms an independent network management access channel through the network management IP address and the network management VLAN, to perform operation and maintenance of the digital microwave transmission device.

With evolution of a wireless transmission service to an IP era, the digital microwave transmission device is also developed along a direction from a traditional separated system structure to an integrated all outdoor system structure. A traditional separated microwave device is divided into two parts, namely an indoor unit and an outdoor unit, which are connected through a coaxial cable, and separately implement a baseband Modulation and Demodulation (MODEM) function and a Radio Frequency Receiving and Sending (RF) function. An integrated all outdoor digital microwave device integrates both a baseband MODEM unit and an RF unit into the outdoor unit, and completely adopts a pure IP way to transmit a service, which is different from the traditional separated system structure.

A characteristic of the integrated all outdoor digital microwave device determines two scenes when the integrated all outdoor digital microwave device is used. At a terminal access station, an all outdoor digital microwave transmission device is directly connected with a base station, and uses an independent working mode, and is managed by the network device management system through an independent network management management channel; at a relay station or a convergence station, the all outdoor digital microwave transmission device is needed to be combined and used with an IP transmission device, to complete multi-directional and multi-service transmission. When the all outdoor digital microwave transmission device is combined and used with the IP transmission device, if the traditional digital microwave transmission device management way is taken as a basic, then an IP transmission device management network element and an integrated all outdoor digital microwave transmission device management network element are needed to be separately created in the network device management system, and the following defects exist:
1: The network management IP address is needed to be independently allocated to the digital microwave transmission device and the IP transmission device in the network device management system, and a device access provider IP address usage requirement is increased, and an excessive network element increases network management topological complicity, and increases a maintenance cost and a maintenance workload of the device access provider.
2: When it needs configuration parameters of multiple digital microwave transmission devices are consistent, a network management manager needs to perform separate configuration aiming at each digital microwave transmission device, and management complexity and operation inconvenience are increased.
3: When a service transmission link interrupt failure emerges because a microwave transmission service is influenced by an external environment, service failure alarms reported by the IP transmission device management network element and a microwave transmission device management network element will simultaneously be received in the network device management system. When a network manager analyses the service failure alarm, alarm information of the IP transmission device management network element and the microwave transmission device management network element is needed to be simultaneously be analysed, and an alarm analysis workload and the operation complicity of alarm processing are increased.
4: When analysing and maintaining performance date of a transmission service of a station, the performance data of the IP transmission device and the digital microwave transmission device are needed to be simultaneously analysed, and a performance data analysis workload is increased.

Document US5630212A provides a structure for controlling the output power from a microwave transmitter uses a digital value transmitted under control of software to an outdoor unit of a transmitter thereby to allow the power output of the transmitter to be changed under control of the software. The digital value is generated by an indoor unit of the transmitter or a remote transmitter across a link or elsewhere in a network. Other parameters of the transmitter can also be varied under control of the software. These parameters include the frequency and muting as well as the generation of test signals at the transmitter. In one embodiment, the outdoor unit contains a non-volatile memory in which the digital value is stored and a microprocessor which generates a control signal from the digital value to set the output power of the transmitter. Software executed by the microprocessor can correct the control signal for temperature so that the output power of the transmitter does not change when outdoor temperature changes.

### SUMMARY

The invention is defined by an independent method claim 1 and a corresponding independent system claim 12. Further embodiments are specified in the dependent claims.

Comparing with the related art, an advantage of the embodiment of the disclosure is: complicated configuration and maintenance of the digital microwave transmission device are entrusted to the IP transmission device for operation, a user only needs to create an IP transmission device network element in the network device management system, to achieve the purpose of managing the IP transmission device and the digital microwave transmission device, and network management IP planning of the digital microwave transmission device is saved; simultaneously a network topological structure is more clear and simple, and later network expansion is facilitated. In addition, an entrusted management way reports both an alarm and performance data of the microwave transmission device to the IP transmission device, and the alarm and the performance data of the microwave transmission device are exhibited to the user after analysed by the IP transmission device, and a user analysis workload is saved.

### BRIEF DESCRIPTION OF THE DRAWINGS

Fig. 1 is an internal hardware connection diagram of a digital microwave transmission device and an IP transmission device of an embodiment of the disclosure;
Fig. 2 is a diagram of two network management channels inside a digital microwave transmission device of an embodiment of the disclosure, wherein management of the digital microwave transmission device may be independent or entrusted;
Fig. 3 is a flowchart of an independent and entrusted channel management method for an all outdoor digital microwave transmission device provided by an embodiment of the disclosure;
Fig. 4 is a function diagram of an independent and entrusted channel management device for an all outdoor digital microwave transmission device provided by an embodiment of the disclosure;
Fig. 5 is a flowchart of performing configuration on a data access channel, an ACL rule, and a port private VLAN by a digital microwave transmission device of an embodiment of the disclosure;
Fig. 6 is a mode sniffing interaction flowchart between an IP transmission device and a digital microwave transmission device of an embodiment of the disclosure;
Fig. 7 is a mode switching interaction flowchart between an IP transmission device and a digital microwave transmission device of an embodiment of the disclosure;
Fig. 8 is a link keep-alive processing flowchart between an IP transmission device and a digital microwave transmission device of an embodiment of the disclosure; and
Fig. 9 is a flowchart of a digital microwave transmission device switching from an entrusted management working mode to an independent working mode of an embodiment of the disclosure.

### DETAILED DESCRIPTION

A structure and a principle of a preferred embodiment of the disclosure are explained in detail below in combination with the drawings, and it shall be understood that the preferred embodiment explained below is only used to explain and interpret the disclosure, and is not used to limit the disclosure.

An implementation method of the embodiment of the disclosure makes an all outdoor digital microwave transmission device to simultaneously support independent management and entrusted management, wherein an independent management channel corresponds to a network management data access when the all outdoor digital microwave transmission device is singly used at a terminal station; an entrusted management channel corresponds to a control access of an IP transmission device to the digital microwave transmission device when the all outdoor digital microwave transmission device and the IP transmission device are combined and used at a relay station or a convergence station; one entrusted management channel is established between the IP transmission device and the digital microwave transmission device through negotiation, maintenance and management of the digital microwave transmission device are entrusted to the IP transmission device to be performed, and the maintenance and management are no longer singly performed on the digital microwave transmission device by a network device management system.

Because a processing way and a process on the IP transmission device is the same as that on the digital microwave transmission device, then when describing the specific embodiment, only an implementation way of the digital microwave transmission device will be described.

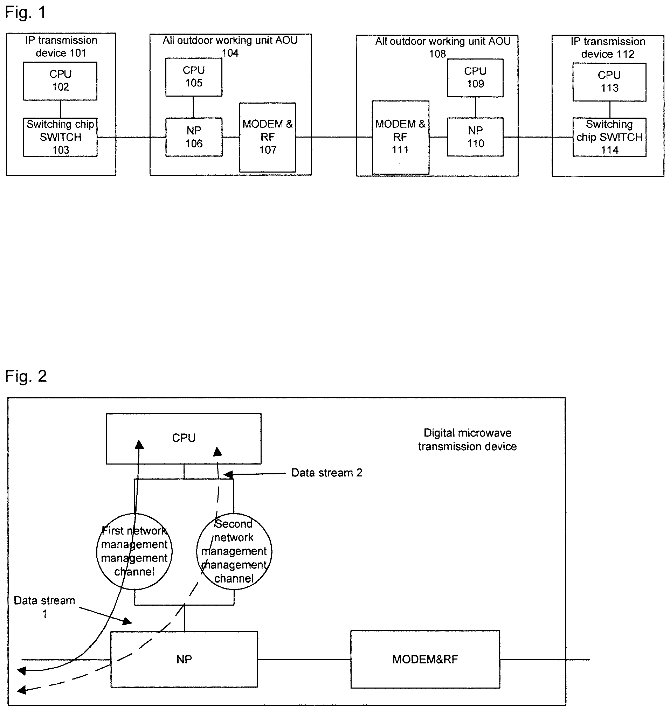

Fig. 1 is an internal hardware connection diagram of a digital microwave transmission device and an IP transmission device of an embodiment of the disclosure. As shown in Fig. 1, the all outdoor digital microwave transmission device adopts an integrated all outdoor system structure, integrates both baseband MODEM and RF unit into an outdoor unit. An All Outdoor Unit (AOU) 104 includes: a CPU 105, an NP 106, and a Modulation and Demodulation and Radio Frequency (MODEM&RF) 107.

The IP transmission device 101 includes: a CPU 102 and a switching chip SWITCH 103.

Because a microwave device transmits data in pairs, a corresponding far-end network element also has another identical integrated all outdoor microwave device and IP transmission device, a one-hop microwave transmission link is constructed between two stations. The embodiment of the disclosure only describes a method for designing the independent and entrusted management channels between the IP transmission device and the all outdoor microwave device on a local-end network element.

Functions of various hardware components are described as below:
The CPU 102 is configured to run an IP transmission device system software, and to complete maintenance and management of the IP transmission device by receiving a network management control message forwarded by the switching chip SWITCH 103; simultaneously the CPU 102 is in charge of generating an entrusted management control data packet aiming at the AOU 104, and receiving and sending the entrusted management control data packet through an interface between the CPU 102 and the switching chip SWITCH 103;
the witching chip SWITCH 103 is configured to forward the entrusted management control data packet, a user service data packet, and a network management control data packet on the IP transmission device, a main function includes receiving and sending the network management control data packet between a panel port and the CPU 102; receiving and sending the user service data packet between the panel port and the NP 106; and receiving and sending the entrusted management data packet between the CPU 102 and the NP 106.

The CPU 105 is configured to run an all outdoor digital microwave transmission device system software; wherein in an independent mode, a network management independent management function of the AOU 104 is completed by receiving the network management control message forwarded by the NP 106; in an entrusted management mode, an entrusted management function of the AOU 104 is completed by receiving an IP transmission device management message forwarded by the NP 106.

The NP 106 is configured to forward the network management control data packet/entrusted management control data packet, the user service data packet, and a far-end network element network management control data packet on the AOU 104, the main function includes: receiving and sending the entrusted management control data packet between the SWITCH 103 and the CPU 105; receiving and sending a control user service data packet and the far-end network element network management control data packet between the switching chip SWITCH 103 and the MODEM&RF 107;
the MODEM&RF 107 is configured to implement a function of modulating and demodulating microwave transmission data and receiving and sending radio frequency, and the main function thereof includes: receiving and sending the user service data packet and a far-end network element control data packet between the NP 106 and an opposite side network element AOU 108.

Fig. 2 is a diagram of two network management channels inside a digital microwave transmission device of an embodiment of the disclosure, wherein management of the digital microwave transmission device may be independent or entrusted. As shown in Fig. 2, two data access channels are separately created by using different IP addresses and VLANs at a CPU Ethernet triple-speed enhanced control port, to make the digital microwave transmission device to be able to support two different management scenes. Wherein, a data stream 1 represents a first independent network management data channel created through a network management IP and a network management VLAN, and the main function is to complete a network management access of the network device management system to the digital microwave transmission device in the independent working mode; a data stream 2 represents a second entrusted management data channel created through a private IP address and a private control VLAN, and the main function thereof is to exchange management data between the IP transmission device and the digital microwave transmission device in the entrusted management mode.

Specifically, one all outdoor digital microwave transmission device has two working modes, namely an independent working mode and an entrusted working mode. Two working modes separately correspond to two network management channel usage scheme, and two working modes provide a configuration port externally and allow a user to select the working mode according to a usage scene of the digital microwave transmission device. Configuring the working mode by the user determines a way for establishing the independent management channel and the entrusted management channel of the digital microwave transmission device.

The way for establishing the independent management channel and the entrusted management channel of the digital microwave transmission device is implemented by creating two data access channels on an Ethernet Triple-Speed Enhanced Controller (ETSEC) connected with the component CPU 105 corresponding to the NP 106. Said two data access channels are divided into a first independent network management data channel, the main function of which is to complete the network management access of the network device management system to the digital microwave transmission device in the independent working mode, and to perform configuration through an allocated network management IP address and an allocated network management VLAN; and a second entrusted management data channel, of which the main function is to complete management and control of the digital microwave transmission device performed by the IP transmission device in the entrusted management working mode, and to perform configuration by using a private IP address and a private control VLAN.

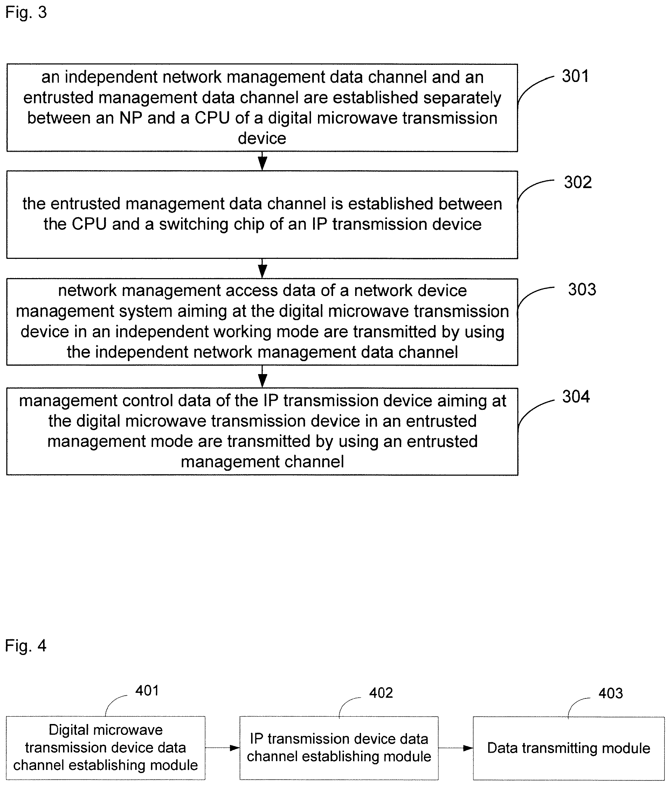

Fig. 3 is a flowchart of a channel management method for an all outdoor digital microwave transmission device provided by an embodiment of the disclosure, as shown in Fig. 3, the following steps are included:
Step 301: an independent network management data channel and an entrusted management data channel are established separately between an NP and a CPU of a digital microwave transmission device;
Step 302: the entrusted management data channel is established between the CPU and a switching chip of an IP transmission device;
Step 303: network management access data of a network device management system aiming at the digital microwave transmission device in an independent working mode are transmitted by using the independent network management data channel;
Step 304: management control data of the IP transmission device aiming at the digital microwave transmission device in an entrusted management mode are transmitted by using an entrusted management channel.

In the embodiment of the disclosure, the digital microwave transmission device works in different usage scenes, and at an terminal access station, the all outdoor digital microwave transmission device is connected with a base station directly, and uses the independent working mode, and the digital microwave transmission device is directly managed by the network device management system through the independent network management data channel; at the relay station or the convergence station, the all outdoor digital microwave transmission device is combined and used with the IP transmission device, and management of the digital microwave transmission device is completed through the entrusted management channel.

The allocated network management IP address and the network management VLAN are configured through a CPU Ethernet control port in the digital microwave transmission device, to establish the independent network management data channel between the NP and the CPU of the digital microwave transmission device; the private IP address and the private control VLAN are configured through the CPU Ethernet control port in the digital microwave transmission device, to establish the entrusted management data channel between the NP and the CPU of the digital microwave transmission device.

In addition, further the private IP address and the private control VLAN are configured through the CPU Ethernet network control port of an IP transmission device switching unit, to establish the entrusted management data channel between the CPU and the switching chip of the IP transmission device switching unit.

The embodiment of the disclosure further includes: configuring an Access Control List (ACL) and the private VLAN at an Ethernet port of the NP corresponding to the switching chip, making the NP to match an entrusted management message feature from the IP transmission device, thereby identifying an entrusted management message, and forwarding the identified entrusted management message to the CPU of the digital microwave transmission device; and configuring the ACL and the private control VLAN at the Ethernet port of the NP corresponding to the CPU of the digital microwave transmission device, making the NP to match the entrusted management message feature from the CPU of the digital microwave transmission device, thereby identifying the entrusted management message, and forwarding the identified entrusted management message to the IP transmission device.

The entrusted management message feature from the digital microwave transmission device is matched by configuring the ACL and the private control VLAN at the Ethernet port of the switching chip corresponding to the NP, thereby the entrusted management message is identified, and the identified entrusted management message is forwarded to the CPU of the IP transmission device. The entrusted management message feature from the CPU of the IP transmission device is matched by configuring the ACL and the private control VLAN at the Ethernet port of the switching chip corresponding to the CPU of the IP transmission device, thereby the entrusted management message is identified, and the identified entrusted management message is forwarded to the digital microwave transmission device.

The embodiment of the disclosure further includes: the entrusted management channel established between the digital microwave transmission device and the IP transmission device is implemented by two procedures, namely sniffing digital microwave transmission device working mode, and switching from the digital microwave transmission device working mode to the entrusted working mode; after link establishment of the entrusted management channel is successful, the digital microwave transmission device and the IP transmission device perform link keep-alive processing of the entrusted management channel.

Fig. 4 is a function diagram of a system by an embodiment of the disclosure, as shown in Fig. 4, the followings are included:
a digital microwave transmission device data channel establishing module 401, configured to separately establish the independent network management data channel and the entrusted management data channel between the NP and the CPU of the digital microwave transmission device;
an IP transmission device data channel establishing module 402, configured to establish the entrusted management data channel between the CPU and the switching chip of the IP transmission device; and
a data transmitting module 403, configured to transmit the network management access data of the network device management system aiming at the digital microwave transmission device in the independent working mode by using the independent network management data channel; and to transmit the management control data of the IP transmission device aiming at the digital microwave transmission device in the entrusted management mode by using the entrusted management channel.

In an actual application, the digital microwave transmission device data channel establishing module 401, the IP transmission device data channel establishing module 402, and the data transmitting module 403 can all be implemented by the CPU, or a Digital Signal Processor (DSP), or a Field Programmable Gate Array (FPGA), etc.; the CPU, the DSP and the FPGA may all be provided at a network side.

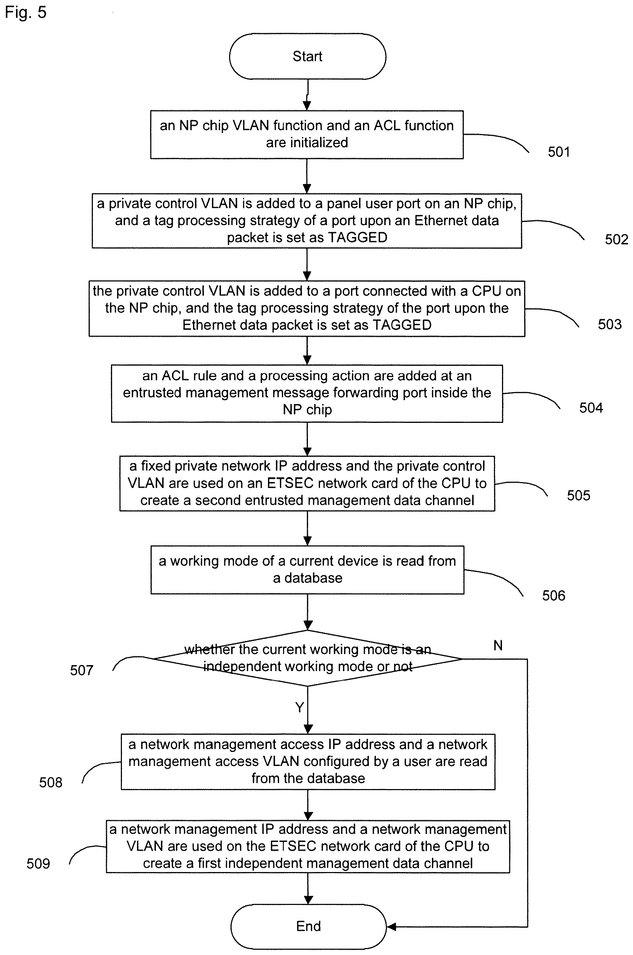

Fig. 5 is a flowchart of performing configuration on a data access channel, an ACL rule, and a port private VLAN by a digital microwave transmission device of an embodiment of the disclosure, as shown in Fig. 5, the AOU 104 of the digital microwave transmission device can receive and send the entrusted management message, the private control VLAN is needed to be configured at the Ethernet port on NP 106 corresponding to SWITCH 103, and simultaneously the ACL is configured; the entrusted management message is identified by matching a feature of the entrusted management message, and the identified entrusted management message is forwarded to a software module on the CPU 105 for processing though a redirect function provided by the chip NP 106; the private control VALN is configured at the Ethernet port on the NP 106 corresponding to the CPU 105, and simultaneously the ACL is configured; an entrusted management respond message is identified by matching the feature of the entrusted management respond message processed by the software AOU 104, and the identified entrusted management respond message is send from a port connected with the IP transmission device on the NP 106 through the redirect function provided by the chip NP 106.

The IP transmission device 101 can receive and send the entrusted management message, and the entrusted management data channel is needed to be created at the ETSEC connected with the component CPU 102 corresponding to SWITCH 103, and the private IP address and the private control VLAN is used to perform configuration. In order to make the SWITCH 103 to be able to receive and send the entrusted management message, the private control VLAN is needed to be configured at the Ethernet port connected with the NP 106 on the component SWITCH 103; the ACL is configured, the entrusted management respond message is identified by matching the feature of the entrusted management respond message, and the identified entrusted management respond message is forwarded to the software module on the CPU 102 through the redirect function provided by the chip SWITCH 103 for processing. The private control VLAN is configured at the Ethernet port connected with the CPU 102 on the component SWITCH 103; the ACL is configured, the entrusted management message is identified by matching the feature of the entrusted management message, and the identified entrusted management message is directly send from the port connected with the AOU 104 through the redirect function provided by the chip SWITCH 103.

Specifically the following steps are included:
an NP chip VLAN function and an ACL function initialization interface are called, to complete a VLAN function and ACL function initialization configuration of an NP chip.
Step 502: a private control VLAN is added at a user port on a panel of the NP chip, in this embodiment a VLAN 4095 is used as a private control VLAN, in this way a VLAN scope which can be used by a user is still 1-4094, and when design expansibility is considered, the user may be permitted to configure the private control VLAN by providing a port, export tag action of a user port on the panel upon an Ethernet data packet is set as TAGGED.
Step 503: the private control VLAN is added at the port connected with the CPU on the NP chip, in this embodiment the VLAN 4095 is used as the private control VLAN, in this way the VLAN range which can be used by the user is still 1~4094; when the design expansibility is considered, the user may be permitted to configure the private control VLAN by providing an interface, the export tag action of this port upon the Ethernet data packet is set as TAGGED.
Step 504: an ACL rule is added at a port processing the entrusted management message on the NP chip.

A rule and action of adding the ACL is as follows:
1. In order to identify a mode sniffing message and a mode switching message of the IP transmission device inside the NP chip of the digital microwave transmission device, the ACL rule and action are added at the port connected with the IP transmission device on the NP chip:
   (a target Media Access Control (MAC) address == a broadcast address) && (VLAN==4095), then a data packet is redirected to the CPU.
2. In order to identify a management message of the IP transmission device after the entrusted management channel is established inside the NP chip of the digital microwave transmission device, the ACL rule and action are added at the port connected with the IP transmission device on the NP chip:
   (a source IP address == an IP transmission device private IP address) && (VLAN==4095), then the data packet is redirected to the CPU.
3. In order to send a respond message processed by a digital microwave device software to the IP transmission device, the ACL rule and action are added at the port connected with the CPU on the NP chip:
   ((a target IP address == the IP transmission device private IP address) && (VLAN==4095)) ∥
   ((the target IP address == another AOU transmission device private IP address) && (VLAN==4095)), then the data packet is redirected to the port connected with the IP transmission device on the NP chip to be sent.

Step 505: at an ETSEC connected with the NP on the CPU, a fixed private IP address 192.168.0.1 (a mask is 255.255.255.0) and a private control VLAN 4095 are used to create a second entrusted management data channel. A virtual network card is added on an ETSEC physical network card with the private IP address and the private control VLAN, by using a vconfig configuration command, to complete configuration of the second entrusted management channel.

Step 506: a current working mode of the digital microwave transmission device configured by the user is acquired from a database.

Step 507: whether the current working mode of the digital microwave transmission device is the independent working mode or not is judged, if it is not the independent working mode, then the current working mode is the entrusted management mode, then the process is ended; if the current working mode is the independent working mode, then step 508 is turned to.

Step 508: a network management IP address and a network management VLAN configured by the user are acquired from the database.

Step 509: a first entrusted management data channel is created by using the network management IP address and the network management VLAN at the ETSEC connected with the NP on the CPU. The virtual network card is also added on the ETSEC physical network card with the network management IP address and the network management VLAN, by using the vconfig configuration command, to complete configuration of the first entrusted management channel.

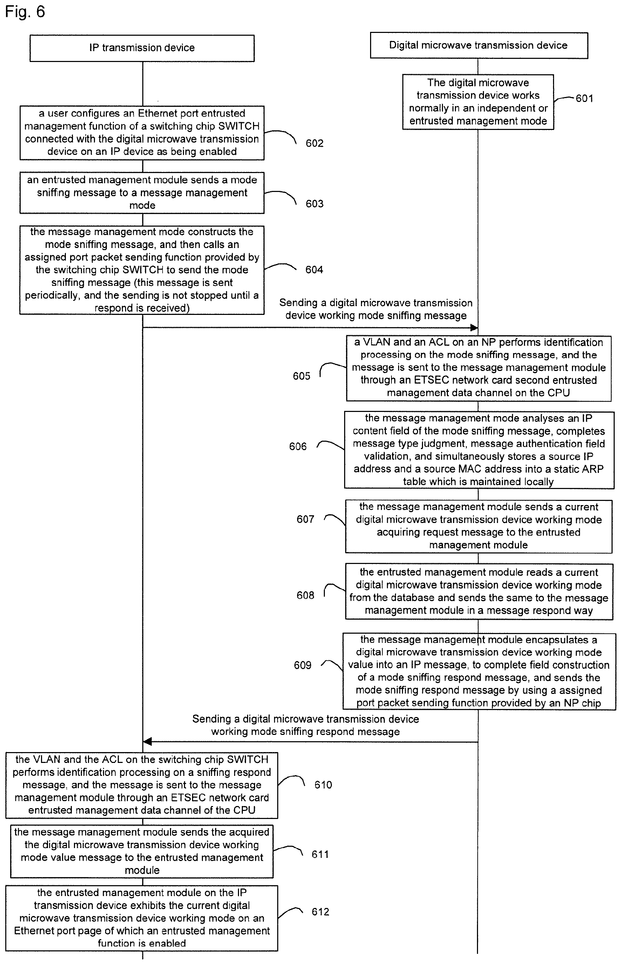

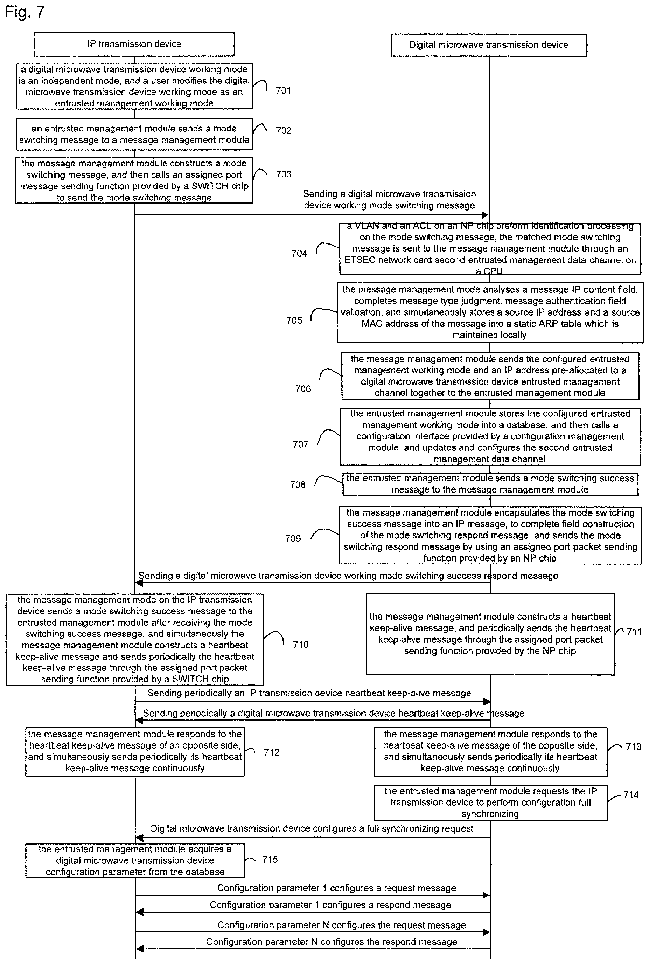

The entrusted management channel established by sending an entrusted management message to each other and negotiating between the IP transmission device and the digital microwave transmission device is explained in detail below in combination with Fig. 6 and Fig. 7, this negotiation procedure includes two procedures, namely mode sniffing and mode switching.

Fig. 6 is a mode sniffing interaction flowchart between an IP transmission device and a digital microwave transmission device of an embodiment of the disclosure, as shown in Fig. 6, the IP transmission device actively sends a working mode querying message to the connected digital microwave transmission device; after the working mode querying message is received, the digital microwave transmission device feeds back a working mode value in a respond message form configured by the current user (the independent working mode or the entrusted working mode) to the IP transmission device. A feature of a mode sniffing message is that an MAC address thereof is full FF and a VLAN value is the private control VLAN. The mode sniffing adopts a form of sending a message periodically, and once the entrusted management channel is established successfully, and after a heartbeat keep-alive message can be interacted normally, sending the mode sniffing message is stopped.

Specifically, the following steps are included:
Step 601: a digital microwave transmission device works normally in an independent mode or an entrusted management mode, and a port A on a digital microwave transmission NP chip is connected with a certain Ethernet port B of an IP transmission device.
Step 602: a user configures entrusted management of a SWITCH chip port B on the IP transmission device as being enabled.
Step 603: after an enabling message configured by the port B is received, the entrusted management module sends a mode sniffing message to a message management mode.
Step 604: the message management mode constructs the mode sniffing message, of which a target MAC field is FF:FF:FF:FF:FF:FF, and a source MAC is an MAC address corresponding to an IP device CPU port; a VLAN identifier of a VLAN field is a private control VLAN 4095; a target IP address field is 255.255.255.255, and a source IP address field is an IP device CPU port private IP address; an IP message content field is querying a current working mode of the digital microwave transmission device; an IP message content trailer field is added with an authentication code; the message management mode implements a message sending function through an assigned port of a SWITCH chip, to send the mode sniffing message through the port B. This step is performed periodically, until the message management mode receives the mode sniffing message.
Step 605: the VLAN and the ACL rule of the port A of an NP chip on the microwave transmission device performs identification processing on the mode sniffing message, the matched mode sniffing message is sent to the message management mode through an ETSEC network card second entrusted management data channel on the CPU.
Step 606: the message management mode analyses the IP content field of the mode sniffing message, it is analysed that this message is the mode sniffing message, and then an entrusted management message authentication function is completed through a validation byte at an IP content trailer, and the source IP address and source MAC address information in the message are stored in a local static Address Resolution Protocol (ARP) table by the message management module, in this way after the entrusted management channel is established, IP communication between the IP transmission device and the digital microwave transmission device may be facilitated.
Step 607: the message management module sends a current working mode acquiring request message to the entrusted management module.
Step 608: the entrusted management module acquires a current digital microwave transmission device working mode configuration value from the database and sends the same to the message management module.
Step 609: the message management module constructs a mode sniffing respond message, of which the target MAC field is FF:FF:FF:FF:FF:FF, and the source MAC is the MAC address of the digital microwave transmission device second entrusted management data channel; the VLAN identifier of the VLAN field is the control VLAN 4095; the target IP address field is 255.255.255.255, the source IP address field is the private IP address of the digital microwave transmission device second entrusted management data channel; the message content field is the digital microwave transmission device working mode configuration value; the message is directly sent from the port A on the NP through an assigned port packet sending function provided by the NP chip.
Step 610: the VLAN and the ACL rule of a SWITCH chip port B on the IP transmission device performs identification processing on the mode sniffing respond message, the matched mode sniffing respond message is sent to the message management mode through the ETSEC network card entrusted management data channel on the CPU.
Step 611: the message management module on the IP transmission device sends the acquired the digital microwave transmission device current working mode value message to the entrusted management module.
Step 612: the entrusted management module on the IP transmission device exhibits the acquired digital microwave transmission device working mode on an IP transmission device port configuration page.

Fig. 7 is a mode switching interaction flowchart between an IP transmission device and a digital microwave transmission device of an embodiment of the disclosure, as shown in Fig. 7, a working mode switching message is sent to the digital microwave transmission device which works independently through the IP transmission device; the digital microwave transmission device which works independently will update the second entrusted management channel by using a private network IP address which is allocated to the digital microwave transmission device by the IP transmission device, to complete entrusted management channel IP address configuration; and then the digital microwave transmission device resets a hardware, waits for parameter full synchronizing configuration in an IP transmission device database, and once full synchronizing configuration of a configuration parameter is completed, the digital microwave transmission device which works independently is switched to the entrusted management working mode for working. A feature of the mode switching message is the MAC address thereof is full FF, and the VLAN value is the private control VLAN.

Specifically, the following steps are included:
Step 701: a digital microwave transmission device working mode is an independent mode, and a user configures and modifies the digital microwave transmission device working mode as an entrusted management working mode; a port A on a digital microwave transmission device NP chip is connected with a certain Ethernet port B of an IP transmission device.
Step 702: after a user configuration parameter is received, an entrusted management module sends a mode switching message to a message management module.
Step 703: the message management module constructs a mode switching message, of which a target MAC field is FF:FF:FF:FF:FF:FF, a source MAC is the MAC address corresponding to an IP device CPU port; a VLAN identifier of a VLAN field is a private control VLAN 4095; a target IP address field is 255.255.255.255, a source IP address field is an IP device CPU port private IP address; an IP message content field is switching a digital microwave transmission device current working mode to an entrusted management working mode; an IP message content trailer field is added with an authentication code; the message management module sends the mode switching message from the port B by using an assigned port message sending function of a SWITCH chip.
Step 704: a VLAN and an ACL rule of a port A of an NP chip on the microwave transmission device preform identification processing on the mode switching message, the matched mode switching message is sent to the message management module through an ETSEC network card second entrusted management data channel on the CPU.
Step 705: the message management module on the digital microwave transmission device analyses an IP content field of the mode switching message, it is analysed that this message is the mode switching message, and then an entrusted management message authentication function is completed through a verification byte at an IP content trailer, and the message management module stores the source IP address and source MAC address information in the message into a local static ARP table.
Step 706: the message management module on a digital microwave transmission device sends the configured entrusted management working mode and a private IP address pre-allocated to a digital microwave transmission device entrusted management channel in an IP message to the entrusted management module on the digital microwave transmission device.
Step 707: the entrusted management module on the digital microwave transmission device stores the configured working mode into a database, and then calls a configuration interface provided by a configuration management module, and updates and configures the private IP address pre-allocated to the second entrusted management channel into the second entrusted management channel.
Step 708: the entrusted management module on the digital microwave transmission device sends a mode switching success message to the message management module.
Step 709: the message management module on the digital microwave transmission device constructs a mode switching respond message, of which a target MAC field is an IP device source MAC address in the mode switching message, a source MAC is the MAC address of the digital microwave transmission device second entrusted management data channel; a VLAN identifier of a VLAN field is the control VLAN 4095; a target IP address field is the IP device source IP address in the mode switching message, a source IP address field is the private IP address of the digital microwave transmission device second entrusted management data channel; a message content field is mode switching success; the message is sent directly from a port A on the NP through an assigned port packet sending function provided by an NP chip.
Step 710: the message management mode on the IP transmission device receives a switching success message, and after a message IP content is analysed, sends a mode switching success message to the entrusted management mode; simultaneously the message management module organizes and constructs a heartbeat keep-alive message, of which a target MAC field is the MAC of the microwave transmission device second entrusted management channel, a source MAC is the MAC address corresponding to an IP device CPU port; a VLAN identifier of a VLAN field is the private control VLAN 4095; a target IP address field is a digital microwave transmission device second entrusted management channel private IP address, a source IP address field is an IP device CPU port private IP address; an IP message content field is a heartbeat keep-alive identifier; and the message is sent from the port B through an assigned port sending function of a SWITCH chip.
Step 711: the message management module on the digital microwave transmission device constructs a heartbeat keep-alive message, of which the target MAC field is the MAC of the IP transmission device entrusted management channel, the source MAC is the MAC address corresponding to the digital microwave transmission device second entrusted management channel; the VLAN identifier of the VLAN field is the private control VLAN 4095; the target IP address field is the IP transmission device CPU port private IP address, the source IP address field is the digital microwave transmission device second entrusted management channel private IP address; the IP message content field is the heartbeat keep-alive identifier; the message is sent from the port A through the assigned port sending function of the NP chip.

After the above steps are completed, the entrusted management channel is successfully established. After the entrusted management channel is established, the IP transmission device and the digital microwave transmission device perform message sending through a unicast message constructed by the message management module, a structure type of a message header field is as message header field description in step 710 and step 711.

Step 712: the message management module on the IP transmission device sends periodically a heartbeat keep-alive message, and responds to the heartbeat keep-alive message sent from an opposite side.

Step 713: the message management module on the digital microwave transmission device periodically sends a heartbeat keep-alive message, and responds to the heartbeat keep-alive message sent from the opposite side.

Step 714: the entrusted management module on the digital microwave transmission device sends a full synchronizing request to the IP transmission device.

Step 715: the entrusted management module on the IP transmission device acquires a digital microwave transmission device configuration parameter from the database, the digital microwave transmission device configuration parameter is sent to the digital microwave transmission device through the entrusted management channel term by term for configuration.

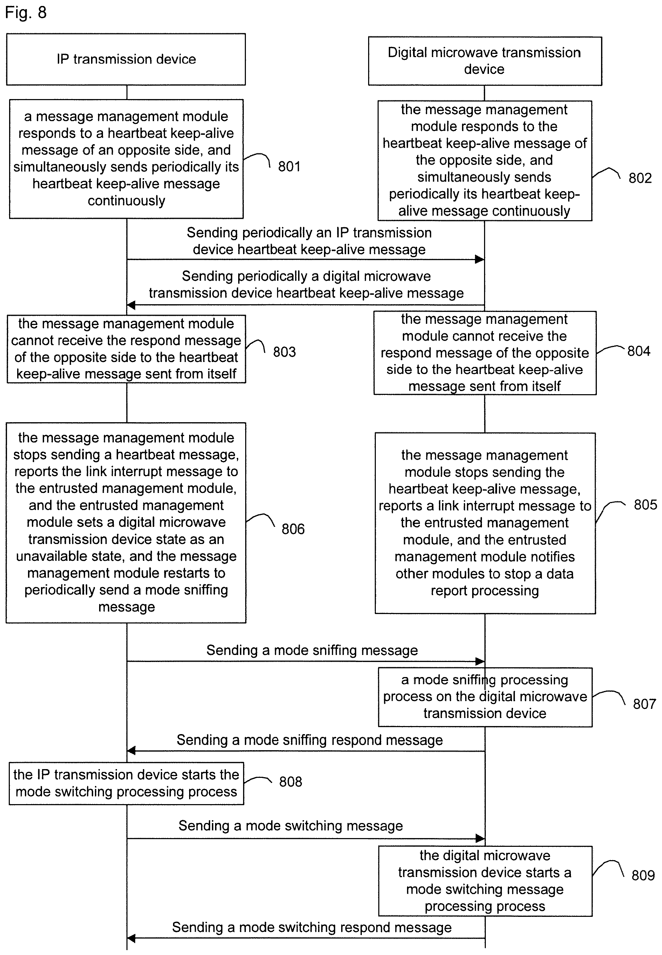

Fig. 8 is a link keep-alive processing flowchart between an IP transmission device and a digital microwave transmission device of an embodiment of the disclosure, as shown in Fig. 8, after an entrusted management channel between the IP transmission and the digital microwave transmission device is established, link keep-alive is needed to be performed on an entrusted management channel link. A link keep-alive procedure is: the IP transmission device and the digital microwave transmission device periodically send a heartbeat message to each other, and respond to the heartbeat message sent by each other; after a link is reconnected, the IP transmission deice performs full synchronizing of configuration data on the digital microwave transmission device of which management is entrusted, so as to perform reactivation configuration on pre-configuration of the digital microwave transmission device by a user during a link disconnection period.

Specifically, after the entrusted management channel is established, the IP transmission device and the digital microwave transmission device periodically send the heartbeat message to each other, and respond to the heart message sent by each other. Once the digital microwave transmission device cannot receive the respond message of the heartbeat message sent from itself, then the digital microwave transmission device considers that an entrusted management link channel is interrupted, stops sending its heartbeat message, and positively waits for a mode sniffing and mode switching procedures of the IP transmission device, so as to re-establish an entrusted management link; after the respond message of the heartbeat message sent from the IP transmission device cannot be received, the IP transmission device stops sending its the heartbeat message, and turns over to start the mode sniffing procedure so as to re-establish the entrusted management link. When establishment of the entrusted management link is recovered, the digital microwave transmission device needs to initiate a configuration data full synchronizing request to the IP transmission device, to reactive the pre-configuration of the digital microwave transmission device on the IP transmission device performed by the user during a link disconnection period; simultaneously, the digital microwave transmission device performs supplementary reporting of an alarm and performance report data generated by itself during the link disconnecting period to the IP transmission device.

Specifically the following steps are included:
Step 801: the message management module on the IP transmission device periodically sends the heartbeat keep-alive message, and responds to the heartbeat keep-alive message sent from the opposite side.
Step 802: the message management module on the digital microwave transmission device periodically sends the heartbeat keep-alive message, and responds to the heartbeat keep-alive message sent from the opposite side.
Step 803: because of link interruption, the message management module on the IP transmission device cannot receive the respond message of the opposite side to the heartbeat keep-alive message sent from itself.
Step 804: because of the link interruption, the message management module on the digital microwave transmission device cannot receive the respond message of the opposite side to the heartbeat keep-alive message sent from itself.
Step 805: the message management module on the digital microwave transmission device stops sending its heartbeat keep-alive message, reports a link interrupt message to the entrusted management module, and the entrusted management module notifies other software modules to stop a data service needed to be reported.
Step 806: the message management module on the IP transmission device stops sending its heartbeat keep-alive message, reports the link interrupt message to the entrusted management module, and the entrusted management module sets the digital microwave transmission device as being in an unavailable state; the message management module also restarts to send the mode sniffing message to the digital microwave transmission device. If the link is not recovered, then the mode sniffing message is periodically sent.
Step 807: the digital microwave transmission device installs a mode sniffing processing process, and sends a mode sniffing respond message.
Step 808: the IP transmission device starts a mode switching process processing.
Step 809: the digital microwave transmission device starts a switching message processing process.

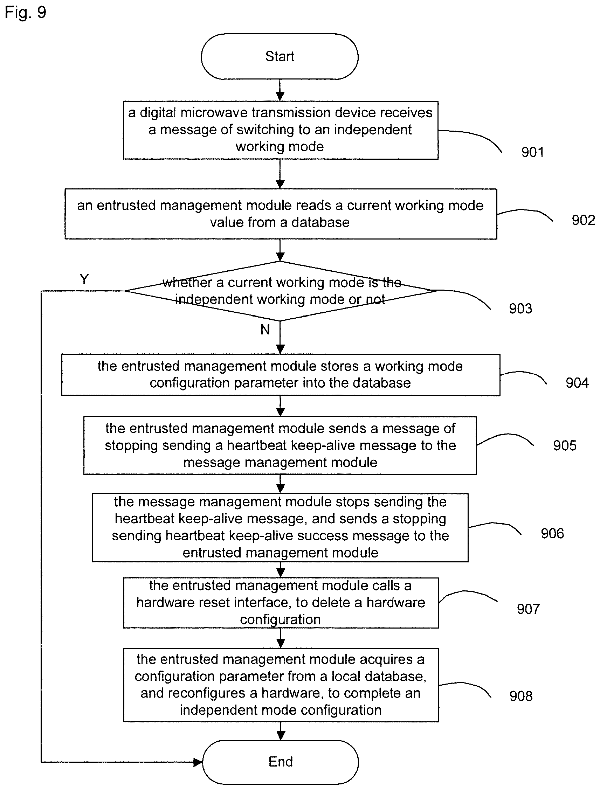

Fig. 9 is a flowchart of a digital microwave transmission device switching from an entrusted management working mode to an independent working mode of an embodiment of the disclosure, as shown in Fig. 9, after the digital microwave transmission device of which management is entrusted receives a configuration message of switching to the independent working mode, the digital microwave transmission device resets an existing hardware, and reconfigures a hardware by using a configuration parameter in a database on the digital microwave transmission device, and is switched to the independent working mode.

Specifically, the following steps are included:
Step 901: a digital microwave transmission device receives a configuration message of switching to an independent mode.
Step 902: an entrusted management module acquires a working mode value of a current digital microwave transmission device from a database.
Step 903: the entrusted management module judges whether the current working mode is the independent mode or not, if it is the independent mode, then the process is ended; if it is not the independent mode, then step 904 is turned to.
Step 904: the entrusted management module stores a working mode configuration parameter into the database.
Step 905: the entrusted management module sends a message to the message management module, to make the message management module to stop sending a heartbeat keep-alive message.
Step 906: the message management module stops sending the heartbeat keep-alive message, and notifies the entrusted management module of that stopping sending the heartbeat keep-alive message is successfully configured.
Step 907: the entrusted management module calls a hardware reset interface, to delete an original configuration of a hardware.
Step 908: the entrusted management module acquires a configuration parameter from a local database, and reconfigures the hardware, to complete parameter configuration in the independent mode.

Because when purchasing a device at a relay node or a convergence node, an operator generally uses a transmission device of the same device provider, when a device provider designs the IP transmission device and the digital microwave transmission device, a design way of the embodiment of the disclosure is taken as a basis, a more flexible digital microwave transmission device management way may be provided to the operator.

In conclusion, in the embodiment of the disclosure, complicated configuration and maintenance of the digital microwave transmission device are entrusted to the IP transmission device to be operated, the user only needs to creates an IP transmission device network element in the network device management system, to achieve a purpose of simultaneously managing the IP transmission device and the digital microwave transmission device, which saves planning of a digital microwave transmission device network management IP, and simultaneously a network topological structure is more clear and simple, and later network expansion is facilitated. In addition, an entrustment management way reports both an alarm and performance data of the microwave transmission device to the IP transmission device, and the alarm and the performance data are then exhibited to the user after analysed by the IP transmission device, and a user analysis workload is saved.

## Claims

1. A channel management method for an all outdoor digital microwave transmission device (104, 108), which completes service transmission through a combination of an all outdoor digital microwave transmission device (104, 108) comprising a Network Processor, NP, (106, 110) and a first Central Processing Unit, CPU, (105, 109) and an Internet Protocol, IP, transmission device (101, 112) comprising a second CPU (102, 113) and a switching chip (103, 114), **characterized in that** the method comprises:
establishing (301) separately an independent network management data channel and an entrusted management data channel between the NP (106, 110) and the first CPU (105, 109) of the digital microwave transmission device (104, 108), wherein the digital microwave transmission device has an independent working mode and an entrusted management mode; in the independent working mode, the independent network management data channel is for a network management data access in a case where the all outdoor digital microwave transmission device is singly used and directly connected with a base station at an access station terminal, and in the entrusted management mode, the entrusted management data channel is used for a control access of the IP transmission device to the digital microwave transmission device in a case where the all outdoor digital microwave transmission device and the IP transmission device are combined and used at a relay station or a convergence station;
establishing (302) an entrusted management data channel between the second CPU (102, 113) and the switching chip (103, 114) of the IP transmission device (101, 112);
transmitting (303) network management access data of a network device management system aiming at the digital microwave transmission device (104, 108) in the independent working mode by using the independent network management data channel; and
transmitting (304) management control data of the IP transmission device (101, 112) aiming at the digital microwave transmission device (104, 108) in an entrusted management mode by using an entrusted management channel between the IP transmission device (101, 112) and the digital microwave transmission device (104, 108), the entrusted management channel comprises the entrusted management data channel between the NP and the first CPU of the digital microwave transmission device (104, 108) and the entrusted management data channel between the second CPU and the switching chip of the IP transmission device (101, 112).

2. The method according to claim 1, wherein in a case where the digital microwave transmission device (104, 108) is located at an access station terminal, directly connecting, by the digital microwave transmission device (104, 108), with a base station, using the independent working mode, and managing, by the network device management system, the digital microwave transmission device (104, 108) through the independent network management data channel; and
in a case where the digital microwave transmission device (104, 108) is located at a relay station or a convergence station, managing, by the IP transmission device, the digital microwave transmission device through an entrusted management channel.

3. The method according to claim 1, wherein the establishing the independent network management data channel between the NP and the first CPU of the digital microwave transmission device (104, 108) comprises:
establishing the independent network management data channel between the NP and the first CPU of the digital microwave transmission device by configuring a network management IP address and a network management Virtual Local Area Network, VLAN, at a CPU Ethernet control port in the digital microwave transmission device.

4. The method according to claim 1, wherein the establishing the entrusted management data channel between the NP (106, 110) and the first CPU (105, 109) of the digital microwave transmission device (104, 108) comprises:
establishing the entrusted management data channel between the NP (106, 110) and the first CPU (105, 109) of the digital microwave transmission device (104, 108) by configuring a private IP address and a private control VLAN at a CPU Ethernet control port in the digital microwave transmission device (104, 108).

5. The method according to claim 1, further comprising:
establishing the entrusted management data channel between the second CPU and the switching chip (103, 114) of the IP transmission device (101, 112) by configuring a private IP address and a private control VLAN at a CPU Ethernet control port of the IP transmission device (101, 112).

6. The method according to claim 1, further comprising:
configuring an Access Control List, ACL, and a private control VLAN at an Ethernet port of the switching chip (103, 114) corresponding to the NP, making the NP to perform feature matching and identifying on an entrusted management message from the IP transmission device, and sending the identified entrusted management message to the first CPU of the digital microwave transmission device (104, 108); and
configuring the ACL and the private control VLAN at the Ethernet port of the first CPU of the digital microwave transmission device corresponding to the NP, making the NP to perform feature matching and identifying on the entrusted management message from the first CPU of the digital microwave transmission device (104, 108), and sending the identified entrusted management message to the IP transmission device.

7. The method according to claim 1, further comprising:
configuring an ACL and a private control VALN at an Ethernet port of the NP corresponding to the switching chip (103, 114), performing feature matching and identifying on an entrusted management message from the digital microwave transmission device (104, 108), and sending the identified entrusted management message to the second CPU of the IP transmission device; and
configuring the ACL and the private control VLAN at the Ethernet port of the second CPU of the IP transmission device corresponding to the switching chip (103, 114), performing feature matching and identifying on the entrusted management message from the second CPU of the IP transmission device, and sending the identified entrusted management message to the digital microwave transmission device.

8. The method according to claim 1, further comprising:
establishing an entrusted management channel between the digital microwave transmission device and the IP transmission device by taking sniffing a digital microwave transmission device working mode and switching from the digital microwave transmission device working mode to an entrusted working mode as a basis; and
after link establishment of the entrusted management channel is successful, performing, by the digital microwave transmission device (104, 108) and the IP transmission device, link keep-alive processing of the entrusted management channel.

9. The method according to claim 8, wherein the establishing the entrusted management channel between the digital microwave transmission device and the IP transmission device by taking sniffing the digital microwave transmission device (104, 108) working mode as the basis comprises:
sending, by the IP transmission device, a working mode querying message to the digital microwave transmission device (104, 108); and
after receiving the working mode querying message, feeding back, by the digital microwave transmission device (104, 108), a working mode value configured by a current user to the IP transmission device through a respond message form.

10. The method according to claim 8, wherein the taking switching from the digital microwave transmission device working mode to the entrusted working mode as the basis comprises:
sending, by the IP transmission device, a working mode switching message to the digital microwave transmission device (104, 108) which works independently; and
responding to, by the digital microwave transmission device (104, 108) which works independently, the working mode switching message, updating a private IP address of a CPU Ethernet control port of the digital microwave transmission device by using the private IP address of the digital microwave transmission device (104, 108) allocated by the IP transmission device, and establishing a digital microwave transmission device (104, 108) entrusted management channel.

11. The method according to claim 8, wherein the performing the link keep-alive processing of the entrusted management channel comprises:
sending periodically, by the IP transmission device and the digital microwave transmission device (104, 108), a heartbeat message to each other, and responding to the heartbeat message sent by each other; and
performing, by the IP transmission device, full synchronization of configuration data on the digital microwave transmission device of which management is entrusted after a link is reconnected, to perform reactivation configuration on pre-configuration of the digital microwave transmission device performed by a user during a link disconnection period.

12. A system comprising an all outdoor digital microwave transmission device (104, 108) and an Internet Protocol, IP, transmission device (101, 112), configured to execute the method of claim 1.

13. The system according to claim 12, wherein in a case where the digital microwave transmission device is located at an access station terminal, the digital microwave transmission device directly connects with a base station, the independent working mode is used, and the network device management system manages the digital microwave transmission device (104, 108) through the independent network management data channel; and
in a case where the digital microwave transmission device is located at a relay station or a convergence station, the IP transmission device manages the digital microwave transmission device through an entrusted management channel.

14. The system according to claim 12, wherein the digital microwave transmission device data channel establishing module (401) is further configured to
establish the independent network management data channel between the NP and the first CPU of the digital microwave transmission device (104, 108) by configuring a network management IP address and a network management Virtual Local Area Network, VLAN, at a CPU Ethernet control port in the digital microwave transmission device; or
establish the entrusted management data channel between the NP and the first CPU of the digital microwave transmission device by configuring a private IP address and a private control VLAN at a CPU Ethernet control port in the digital microwave transmission device (104, 108).

15. The system according to claim 12, wherein the Internet Protocol, IP, transmission device data channel establishing module (402) is further configured to establish the entrusted management data channel between the second CPU and the switching chip (103, 114) of the IP transmission device by configuring a private IP address and a private control VLAN at a CPU Ethernet control port of the IP transmission device (101, 112).

## Patentansprüche

1. Verfahren zur Kanalverwaltung für ein digitales Mikrowellenübertragungsgerät (104, 108) ausschließlich für den Außenbereich, das die Dienstübertragung durch eine Kombination aus einem digitalen Mikrowellenübertragungsgerät (104, 108) ausschließlich für den Außenbereich durchführt. Dieses umfasst einen Netzwerkprozessor NP (106, 110), eine erste zentrale Verarbeitungseinheit CPU (105, 109) und ein Internetprotokoll-IP-Übertragungsgerät (101, 112), welches ein zweites CPU (102, 113) und einen Schaltchip (103, 114) umfasst, **dadurch gekennzeichnet, dass** das Verfahren umfasst: Separates Einrichten (301) eines unabhängigen Datenkanals zur Netzwerkverwaltung und eines anvertrauten Verwaltungsdatenkanals zwischen dem NP (106, 110) und dem ersten CPU (105, 109) des Mikrowellen-Übertragungsgeräts (104, 108), wobei das digitale Mikrowellen-Übertragungsgerät einen unabhängigen Arbeitsmodus und einen anvertrauten Verwaltungsmodus aufweist; im unabhängigen Arbeitsmodus wird der unabhängige Netzwerkverwaltungs-Datenkanal für einen Netzwerkverwaltungs-Datenzugriff in dem Fall verwendet, wo das digitale Mikrowellen-Übertragungsgerät für den Außenbereich einzeln verwendet und direkt mit einer Basisstation an einem Terminal einer Zugangsstation verbunden wird, und im anvertrauten Verwaltungsmodus wird der anvertraute Verwaltungsdatenkanal für einen Kontrollzugriff des IP-Übertragungsgeräts auf das digitale MikrowellenÜbertragungsgerät verwendet, in dem Fall, wo das digitale Mikrowellen-Übertragungsgerät für den gesamten Außenbereich und das IP-Übertragungsgerät kombiniert und an einer Relaisstation oder einer Konvergenzstation verwendet werden; Einrichten (302) eines anvertrauten Verwaltungsdatenkanals zwischen dem zweiten CPU (102, 113) und dem Schaltchip (103, 114) des IP-Übertragungsgeräts (101, 112); Übertragen (303) von Zugriffsdaten der Netzwerkverwaltung eines Netzwerkgeräte-Verwaltungssystems, das auf das digitale Mikrowellenübertragungsgerät (104, 108) in dem unabhängigen Arbeitsmodus abzielt, unter Verwendung des unabhängigen Netzwerkverwaltungs-Datenkanals; und Übertragen (304) von Verwaltungssteuerdaten des IP-Übertragungsgeräts (101, 112), die auf das digitale Mikrowellen-Übertragungsgerät (104, 108) gerichtet sind, in einem anvertrauten Verwaltungsmodus unter Verwendung eines anvertrauten Verwaltungskanals zwischen der IP-Übertragungsgerät (101, 112) und dem MikrowellenÜbertragungsgerät (104, 108); der anvertraute Verwaltungskanal umfasst den anvertrauten Verwaltungsdatenkanal zwischen dem NP und dem ersten CPU des Mikrowellen-Übertragungsgeräts (104, 108) sowie den anvertrauten Verwaltungsdatenkanal zwischen dem zweiten CPU und dem Schaltchip des IP-Übertragungsgeräts (101, 112) .

2. Verfahren nach Anspruch 1, wobei in dem Fall, wo sich das digitale Mikrowellen-Übertragungsgerät (104, 108) an einem Terminal der Zugangsstation befindet, eine direkte Verbindung durch das digitale MikrowellenÜbertragungsgerät (104, 108) mit einer Basisstation hergestellt wird, und zwar unter Verwendung des unabhängigen Arbeitsmodus und Verwaltung des digitalen Mikrowellen-Übertragungsgeräts (104, 108) durch das Netzwerkgeräte-Verwaltungssystem mithilfe des unabhängigen Netzwerkverwaltungs-Datenkanals; und in dem Fall, wo sich das digitale Mikrowellen-Übertragungsgerät (104, 108) an einer Relaisstation oder einer Konvergenzstation befindet, Verwalten des digitalen Mikrowellen-Übertragungsgeräts durch das IP-Übertragungsgerät mithilfe eines anvertrauten Verwaltungskanals.

3. Verfahren nach Anspruch 1, wobei das Herstellen des unabhängigen Netzwerkverwaltungs-Datenkanals zwischen dem NP und des ersten CPU des Mikrowellen-Übertragungsgeräts (104, 108) umfasst: Herstellen des unabhängigen Netzwerkverwaltungs-Datenkanals zwischen dem NP und dem ersten CPU des digitalen Mikrowellen-Übertragungsgeräts durch Konfigurieren einer Netzwerkverwaltungs-IP-Adresse und eines virtuellen Netzwerkverwaltungs-LAN = VLAN, an einem CPU-Ethernet-Steuerungsport im digitalen MikrowellenÜbertragungsgerät.

4. Verfahren nach Anspruch 1, wobei das Einrichten des anvertrauten Verwaltungsdatenkanals zwischen dem NP (106, 110) und dem ersten CPU (105, 109) des Mikrowellen-Übertragungsgeräts (104, 108) umfasst: Einrichten der anvertrauten Verwaltungsdatenkanals zwischen dem NP (106, 110) und dem ersten CPU (105, 109) des Mikrowellen-Übertragungsgeräts (104, 108) durch Konfigurieren einer privaten IP-Adresse und eines privaten Steuer-VLANs an einem CPU-Ethernet-Steueranschluss im digitalen Mikrowellen-Übertragungsgerät (104, 108).

5. Verfahren nach Anspruch 1, ferner umfassend: Aufbau des anvertrauten Verwaltungsdatenkanals zwischen dem zweiten CPU und dem Schaltchip (103, 114) des IP-Übertragungsgeräts (101, 112) durch Konfigurieren einer privaten IP-Adresse und eines privaten Steuer-VLAN an einem CPU-Ethernet-Steuerungsport des IP-Übertragungsgeräts (101, 112).

6. Verfahren nach Anspruch 1, ferner umfassend: Konfigurieren einer Zugriffssteuerungsliste, ACL, und eines privaten Steuerungs-VLANs an einem Ethernet-Port des Schaltchips (103, 114), der dem NP entspricht: Veranlassen des NP zur Durchführung eines Merkmalsabgleichs und Identifizierens einer anvertrauten Verwaltungsnachricht vom IP-Übertragungsgerät, und Senden der identifizierten anvertrauten Verwaltungsnachricht an das erste CPU des digitalen Mikrowellen-Übertragungsgeräts (104, 108); sowie Konfigurieren der ACL und des privaten Steuer-VLAN am Ethernet-Port des ersten CPU des digitalen Mikrowellen-Übertragungsgeräts entsprechend dem NP: Wodurch der NP veranlasst wird, einen Merkmalsabgleich durchzuführen und die anvertraute Verwaltungsnachricht vom ersten CPU des digitalen Mikrowellen-Übertragungsgeräts (104, 108) zu identifizieren, sowie Senden der identifizierten anvertrauten Verwaltungsnachricht an das IP-Übertragungsgerät.

7. Verfahren nach Anspruch 1, ferner umfassend: Konfigurieren einer ACL und eines privaten Steuer-VLAN an einem Ethernet-Port des NP entsprechend dem Schaltchip (103, 114), Durchführen eines Merkmalsabgleichs und Identifizieren auf einer anvertrauten Verwaltungsnachricht vom digitalen MikrowellenÜbertragungsgerät (104, 108) und Senden der identifizierten anvertrauten Verwaltungsnachricht an das zweite CPU des IP-Übertragungsgeräts; und Konfigurieren der ACL und des privaten Steuer-VLAN am Ethernet-Port des zweiten CPU der IP-Übertragungsgerät entsprechend dem Schaltchip (103, 114), Durchführen eines Merkmalsabgleichs und Identifizieren an der anvertrauten Verwaltungsnachricht vom zweiten CPU des IP-Übertragungsgeräts, sowie Senden der identifizierten anvertrauten Verwaltungsnachricht an das digitale Mikrowellen-Übertragungsgerät.

8. Verfahren nach Anspruch 1, ferner umfassend: Einrichten eines anvertrauten Verwaltungskanals zwischen dem digitalen Mikrowellen-Übertragungsgerät und dem IP-Übertragungsgerät durch Übernehmen eines Sniffing-Arbeitsmodus eines digitalen Mikrowellen-Übertragungsgeräts und Umschalten vom Arbeitsmodus des digitalen Mikrowellen-Übertragungsgeräts zu einem anvertrauten Basis-Arbeitsmodus; und nachdem der Verbindungsaufbau des anvertrauten Verwaltungskanals erfolgreich ist, Durchführen einer Verarbeitung zwecks Verbindungserhaltung des anvertrauten Verwaltungskanals durch das digitale Mikrowellen-Übertragungsgerät (104, 108) und das IP-Übertragungsgerät.

9. Verfahren nach Anspruch 8, wobei das Einrichten des anvertrauten Verwaltungskanals zwischen dem digitalen Mikrowellen-Übertragungsgerät und dem IP-Übertragungsgerät durch Entgegennehmen des Sniffing-Arbeitsmodus des digitalen Mikrowellen-Übertragungsgeräts (104, 108) als Grundlage Folgendes umfasst: Senden einer Arbeitsmodus-Abfragenachricht durch das IP-Übertragungsgerät an das digitale Mikrowellen-Übertragungsgerät (104, 108); und nach dem Empfangen der Arbeitsmodus-Abfragenachricht, Rückmelden eines von einem aktuellen Benutzer konfigurierten Arbeitsmoduswerts durch das digitale MikrowellenÜbertragungsgerät (104, 108) an das IP-Übertragungsgerät durch ein Antwortnachrichtenformular.

10. Verfahren nach Anspruch 8, wobei das Entgegennehmen des Umschaltens von dem Arbeitsmodus der digitalen Mikrowellen-Sendevorrichtung in den anvertrauten Arbeitsmodus als Grundlage Folgendes umfasst: Senden einer Arbeitsmodus-Umschaltnachricht durch das IP-Übertragungsgerät an das digitale MikrowellenÜbertragungsgerät (104, 108), das unabhängig arbeitet; und Reagieren auf die Arbeitsmodus-Umschaltnachricht durch das unabhängig arbeitende digitale MikrowellenÜbertragungsgerät (104, 108), Aktualisieren einer privaten IP-Adresse eines CPU-Ethernet-Steuerports des digitalen Mikrowellen-Übertragungsgeräts unter Verwendung der privaten IP-Adresse des digitalen Mikrowellen-Übertragungsgeräts (104, 108), die vom IP-Übertragungsgerät zugewiesen wird, und Einrichten eines dem digitalen Mikrowellen-Übertragungsgerät (104, 108) anvertrauten Verwaltungskanals.

11. Verfahren nach Anspruch 8, wobei das Durchführen der Verarbeitung zur Aufrechterhaltung der Verbindung des anvertrauten Verwaltungskanals umfasst: Periodisches Senden einer Heartbeat-Nachricht zueinander durch das IP-Übertragungsgerät und das digitale MikrowellenÜbertragungsgerät (104, 108), und das Antworten auf die zueinander gesendete Heartbeat-Nachricht; sowie Durchführen einer vollständigen Synchronisierung von Konfigurationsdaten auf dem digitalen MikrowellenÜbertragungsgerät, dem die Verwaltung anvertraut ist, durch das IP-Übertragungsgerät, nachdem eine Verbindung wiederhergestellt wurde, um eine Reaktivierungs-Konfiguration bei einer Vorkonfiguration des digitalen Mikrowellen-Übertragungsgeräts durchzuführen, welche während eines Zeitraums, wo die Verbindung getrennt war, durch einen Benutzer durchgeführt wurde.

12. System, das ein digitales Mikrowellenübertragungsgerät (104, 108) für den Außenbereich und ein Internetprotokoll-IP-Übertragungsgerät (101, 112) umfasst, das konfiguriert ist, um das Verfahren nach Anspruch 1 auszuführen.

13. System nach Anspruch 12, wobei in dem Fall, wo sich das digitale Mikrowellen-Übertragungsgerät an einem Terminal einer Zugangsstation befindet; das digitale Mikrowellen-Übertragungsgerät sich direkt mit einer Basisstation verbindet: Der unabhängige Arbeitsmodus wird verwendet, und das Netzwerkgeräte-Verwaltungssystem verwaltet das digitale MikrowellenÜbertragungsgerät (104, 108) durch die unabhängige Netzwerkverwaltung des Datenkanals; und in dem Fall, wo sich das digitale Mikrowellen-Übertragungsgerät an einer Relaisstation oder einer Konvergenzstation befindet, verwaltet das IP-Übertragungsgerät das digitale Mikrowellen-Übertragungsgerät durch einen anvertrauten Verwaltungskanal.

14. System nach Anspruch 12, wobei das Modul (401) zum Einrichten des Datenkanals des digitalen Mikrowellen-Übertragungsgeräts ferner dazu konfiguriert ist, den unabhängigen Netzwerkverwaltungsdatenkanal zwischen dem NP und dem ersten CPU des digitalen Mikrowellen-Übertragungsgeräts (104, 108) einzurichten, indem eine Netzwerkverwaltungs-IP-Adresse und ein Virtual Local Area Network, VLAN, zur Netzwerkverwaltung an einem CPU-Ethernet-Steuerungsport im digitalen MikrowellenÜbertragungsgerät konfiguriert werden; oder den anvertrauten Verwaltungsdatenkanal zwischen dem NP und dem ersten CPU des digitalen Mikrowellen-Übertragungsgeräts einzurichten, indem eine private IP-Adresse und ein privates Steuer-VLAN an einem CPU-Ethernet-Steuerport im digitalen MikrowellenÜbertragungsgerät (104, 108) konfiguriert werden.

15. System nach Anspruch 12, wobei das Aufbaumodul für den Internetprotokoll-IP-Übertragungsgeräte-Datenkanal (402) ferner konfiguriert ist, den anvertrauten Verwaltungsdatenkanal zwischen dem zweiten CPU und dem Schaltchip (103, 114) des IP-Übertragungsgeräts durch Konfigurieren einer privaten IP-Adresse und eines privaten Steuer-VLANs an einem CPU-Ethernet-Steuerport des IP-Übertragungsgeräts (101, 112) einzurichten.

## Revendications

1. Procédé de gestion de canal pour un dispositif de transmission numérique par micro-ondes en plein air (104, 108), qui achève la transmission de service par l'intermédiaire d'une combinaison d'un dispositif de transmission numérique par micro-ondes en plein air (104, 108) comprenant un processeur de réseau, NP, (106, 110) et une première unité centrale de traitement, CPU, (105, 109) et un dispositif de transmission de protocole Internet, IP, (101, 112) comprenant une deuxième CPU (102, 113) et une puce de commutation (103, 114), **caractérisé en ce que** le procédé comprend: l'établissement (301) séparément d'un canal de données de gestion de réseau indépendant et d'un canal de données de gestion confiée entre le NP (106, 110) et la première CPU (105, 109) du dispositif de transmission numérique par micro-ondes (104, 108), dans lequel le dispositif de transmission numérique par micro-ondes a un mode de travail indépendant et un mode de gestion confiée; dans le mode de travail indépendant, le canal de données de gestion de réseau indépendant est utilisé pour un accès aux données de gestion de réseau dans un cas où le dispositif de transmission numérique par micro-ondes en plein air est utilisé de manière unique et directement connecté à une station de base au niveau d'un terminal de station d'accès, et dans le mode de gestion confiée, le canal de données de gestion confiée est utilisé pour un accès de commande du dispositif de transmission IP au dispositif de transmission numérique par micro-ondes dans un cas où le dispositif de transmission numérique par micro-ondes en plein air et le dispositif de transmission IP sont combinés et utilisés au niveau d'une station relais ou d'une station de convergence; l'établissement (302) d'un canal de données de gestion confiée entre la deuxième CPU (102, 113) et la puce de commutation (103, 114) du dispositif de transmission IP (101, 112); la transmission (303) des données d'accès de gestion de réseau d'un système de gestion de dispositif de réseau visant le dispositif de transmission numérique par micro-ondes (104, 108) dans le mode de travail indépendant en utilisant le canal de données de gestion de réseau indépendant ; et la transmission (304) des données de commande de gestion du dispositif de transmission IP (101, 112) visant le dispositif de transmission numérique par micro-ondes (104, 108) dans un mode de gestion confiée en utilisant un canal de gestion confiée entre le dispositif de transmission IP (101, 112) et le dispositif de transmission numérique par micro-ondes (104, 108), le canal de gestion confiée comprend le canal de données de gestion confiée entre le NP et la première CPU du dispositif de transmission numérique par micro-ondes (104, 108) et le canal de données de gestion confiée entre la deuxième CPU et la puce de commutation du dispositif de transmission IP (101, 112).

2. Procédé selon la revendication 1 comprenant, dans un cas où le dispositif de transmission numérique par micro-ondes (104, 108) est situé au niveau d'un terminal de station d'accès, la connexion directe, par le dispositif de transmission numérique par micro-ondes (104, 108), avec une station de base, en utilisant le mode de travail indépendant, et la gestion, par le système de gestion de dispositif de réseau, du dispositif de transmission numérique par micro-ondes (104, 108) par le biais du canal de données de gestion de réseau indépendant ; et dans un cas où le dispositif de transmission numérique par micro-ondes (104, 108) est situé au niveau d'une station relais ou une station de convergence, la gestion, par le dispositif de transmission IP, du dispositif de transmission numérique par micro-ondes par l'intermédiaire d'un canal de gestion confiée.

3. Procédé selon la revendication 1, dans lequel l'établissement du canal de données de gestion de réseau indépendant entre le NP et la première CPU du dispositif de transmission numérique par micro-ondes (104, 108) comprend: l'établissement du canal de données de gestion de réseau indépendant entre le NP et la première CPU du dispositif de transmission numérique par micro-ondes en configurant une adresse IP de gestion de réseau et un réseau local virtuel de gestion de réseau, VLAN, au niveau d'un port de commande Ethernet de la CPU dans le dispositif de transmission numérique par micro-ondes.

4. Procédé selon la revendication 1, dans lequel l'établissement du canal de données de gestion confiée entre le NP (106, 110) et la première CPU (105, 109) du dispositif de transmission numérique par micro-ondes (104, 108) comprend: l'établissement du canal de données de gestion confiée entre le NP (106, 110) et la première CPU (105, 109) du dispositif de transmission numérique par micro-ondes (104, 108) en configurant une adresse IP privée et un VLAN de contrôle privé au niveau d'un port de contrôle Ethernet de la CPU dans le dispositif de transmission numérique par micro-ondes (104, 108).

5. Procédé selon la revendication 1, comprenant en outre: l'établissement du canal de données de gestion confiée entre la deuxième CPU et la puce de commutation (103, 114) du dispositif de transmission IP (101, 112) en configurant une adresse IP privée et un VLAN de commande privé au niveau d'un port de commande Ethernet de la CPU du dispositif de transmission IP (101, 112).

6. Procédé selon la revendication 1, comprenant en outre: la configuration d'une liste de contrôle d'accès, ACL, et d'un VLAN de contrôle privé au niveau d'un port Ethernet de la puce de commutation de commande privé au niveau d'un port Ethernet de la puce de commutation (103, 114) correspondant au NP, en faisant en sorte que le NP effectue une mise en correspondance de caractéristiques et une identification sur un message de gestion confiée provenant du dispositif de transmission IP, et en envoyant le message de gestion confiée identifié à la première CPU la configuration de l'ACL et du VLAN de contrôle privé au niveau du port Ethernet de la première CPU du dispositif de transmission numérique par micro-ondes correspondant au NP, en faisant en sorte que le NP effectue une mise en correspondance de caractéristiques et une identification sur un message de gestion confiée provenant de la première CPU du dispositif de transmission numérique par micro-ondes (104, 108), et en envoyant le message de gestion confiée identifié au dispositif de transmission IP.

7. Procédé selon la revendication 1, comprenant en outre: la configuration d'une ACL et d'un VLAN de contrôle privé au niveau d'un port Ethernet du NP correspondant à la puce de commutation (103, 114), en effectuant une mise en correspondance de caractéristiques et d'une identification sur un message de gestion confiée provenant du dispositif de transmission numérique par micro-ondes (104, 108), et en envoyant le message de gestion confiée identifié à la deuxième CPU du dispositif de transmission IP; et la configuration de l'ACL et du VLAN de contrôle privé au niveau du port Ethernet de la deuxième CPU du dispositif de transmission IP correspondant à la puce de commutation (103, 114), en effectuant une mise en correspondance et une identification de caractéristiques sur le message de gestion confiée provenant de la deuxième CPU du dispositif de transmission IP, et en envoyant le message de gestion confiée identifié au dispositif de transmission numérique par micro-ondes.

8. Procédé selon la revendication 1, comprenant en outre: l'établissement d'un canal de gestion confiée entre le dispositif de transmission numérique par micro-ondes et le dispositif de transmission IP en prenant comme base l'identification d'un mode de travail du dispositif de transmission numérique par micro-ondes et la commutation du mode de travail du dispositif de transmission numérique par micro-ondes à un mode de travail confié ; et après que l'établissement de la liaison du canal de gestion confiée a réussi, l'exécution, par le dispositif de transmission numérique par micro-ondes (104, 108) et le dispositif de transmission IP, du traitement de maintien de liaison du canal de gestion confié.

9. Procédé selon la revendication 8, dans lequel l'établissement du canal de gestion confiée entre le dispositif de transmission numérique par micro-ondes et le dispositif de transmission IP en prenant comme base l'identification du mode de travail du dispositif de transmission numérique par micro-ondes (104, 108) comprend: l'envoi, par le dispositif de transmission IP, d'un message d'interrogation de mode de travail au dispositif de transmission numérique par micro-ondes (104, 108); et après réception du message d'interrogation de mode de travail, le renvoi, par le dispositif de transmission numérique par micro-ondes (104, 108), d'une valeur de mode de travail configurée par un utilisateur actuel au dispositif de transmission IP par l'intermédiaire d'un formulaire de message de réponse.

10. Procédé selon la revendication 8, dans lequel prendre comme base la commutation du mode de travail du dispositif de transmission numérique par micro-ondes à un mode de travail confié comprend: l'envoi, par le dispositif de transmission IP, d'un message de commutation de mode de travail au dispositif de transmission numérique par micro-ondes (104, 108) qui fonctionne indépendamment; et la réponse, par le dispositif de transmission numérique par micro-ondes (104, 108) qui fonctionne indépendamment, au message de commutation de mode de travail, la mise à jour d'une adresse IP privée d'un port de commande Ethernet de la CPU du dispositif de transmission numérique par micro-ondes en utilisant l'adresse IP privée du dispositif de transmission numérique par micro-ondes (104, 108) attribuée par le dispositif de transmission IP, et l'établissement d'un canal de gestion confiée au dispositif de transmission numérique par micro-ondes (104, 108).

11. Procédé selon la revendication 8, dans lequel l'exécution du traitement de maintien de liaison du canal de gestion confié comprend: l'envoi périodique, par le dispositif de transmission IP et le dispositif de transmission numérique par micro-ondes (104, 108), d'un message battement de cœur l'un vers l'autre, et la réponse au message battement de cœur envoyé par l'autre; et l'exécution, par le dispositif de transmission IP, d'une synchronisation complète des données de configuration sur le dispositif de transmission numérique par micro-ondes dont la gestion est confiée après qu'une liaison est reconnectée, pour exécuter une configuration de réactivation sur la préconfiguration du dispositif de transmission numérique par micro-ondes effectuée par un utilisateur pendant une période de déconnexion de liaison.

12. Système comprenant dispositif de transmission numérique par micro-ondes en plein air (104, 108) et un dispositif de transmission de protocole Internet, IP, (101, 112), configuré pour exécuter le procédé de la revendication 1.

13. Système selon la revendication 12, dans lequel dans un cas où le dispositif de transmission numérique par micro-ondes est situé au niveau d'un terminal de station d'accès, le dispositif de transmission numérique par micro-ondes se connecte directement à une station de base, le mode de travail indépendant est utilisé, et le système de gestion de dispositif de réseau gère le dispositif de transmission numérique par micro-ondes (104, 108) par le biais du canal de données de gestion de réseau indépendant; et dans le cas où le dispositif de transmission numérique par micro-ondes est situé dans une station relais ou une station de convergence, le dispositif de transmission IP gère le dispositif de transmission numérique par micro-ondes via un canal de gestion confiée.

14. Système selon la revendication 12, dans lequel le module d'établissement de canal de données de dispositif de transmission numérique par micro-ondes (401) est en outre configuré pour établir le canal de données de gestion de réseau indépendant entre le NP et la première CPU du dispositif de transmission numérique par micro-ondes (104, 108) en configurant une adresse IP de gestion de réseau et un réseau local virtuel de gestion de réseau, VLAN, au niveau d'un port de commande Ethernet de CPU dans le dispositif de transmission numérique par micro-ondes; ou établir le canal de données de gestion confiée entre le NP et la première CPU du dispositif de transmission numérique par micro-ondes en configurant une adresse IP privée et un VLAN de contrôle privé au niveau d'un port de contrôle Ethernet de la CPU dans le dispositif de transmission numérique par micro-ondes (104, 108).

15. Système selon la revendication 12, dans lequel le module d'établissement de canal de données de dispositif de transmission IP (402) est en outre configuré pour établir le canal de données de gestion confiée entre la deuxième CPU et la puce de commutation (103, 114) du dispositif de transmission IP en configurant une adresse IP privée et un VLAN de commande privé au niveau d'un port de commande Ethernet de la CPU du dispositif de transmission IP (101, 112).
